(19) **Europäisches Patentamt**

**European Patent Office**

**Office européen des brevets**

(11) Numéro de publication: **0 304 584**

**A1**

(12) # DEMANDE DE BREVET EUROPEEN

(21) Numéro de dépôt: **88110204.0**

(22) Date de dépôt: **05.07.85**

(51) Int. Cl.⁴: **A01D 34/66**

(30) Priorité: **06.07.84 FR 8410916**

(43) Date de publication de la demande:
**01.03.89 Bulletin 89/09**

(60) Numéro de publication de la demande initiale
en application de l'article 76 CBE : **0 171 341**

(84) Etats contractants désignés:
**AT BE DE GB IT NL SE**

(71) Demandeur: **KUHN S.A.**
**4, Impasse des Fabriques**
**F-67700 Saverne(FR)**

(72) Inventeur: **Ermacora, Rino**
**5, Rue de Monswiller Ottersthal**
**F-67700 Saverne(FR)**
Inventeur: **Neuerburg, Horst**
**6, Rue des Aubépines**
**F-67700 Saverne(FR)**

(54) **Faucheuse rotative.**

(57) Dans la faucheuse rotative,

Selon l'invention, le plus petit diamètre de l'alésage du cylindre de palier (53) faisant partie intégrante du carter (9) est supérieur au diamètre extérieur de la roue (35) fixée sur l'arbre (52), de telle sorte que l'ensemble prémonté arbre (52) - roue (35) -palier (54) puisse être monté dans l'alésage du cylindre de palier (53) et démonté dudit alésage.

FIG.2

Xerox Copy Centre

La présente invention concerne une faucheuse comportant des organes de coupe rotatifs munis d'au moins un outil de coupe, au moins un desdits organes de coupe rotatifs étant entraîné par des moyens de transmission logés dans un carter situé sous lesdits organes de coupe rotatifs, lesdits moyens de transmission comportant une roue solidaire de l'arbre de l'organe de coupe rotatif entraîné par le bas qui est guidé en rotation dans un palier logé dans l'alésage d'un cylindre de palier faisant partie intégrante du carter.

Une telle faucheuse présente des avantages certains, dans le mesure où, pour lier le cylindre de palier au carter, il n'y a pas à réaliser d'usinages complexes sur le cylindre de palier et le carter, ni à prévoir d'organes d'assemblage complexes. Une telle liaison peut en effet être directement réalisée par moulage par exemple lorsque le carter comporte des éléments en fonte, ou être réalisée par un procédé de soudage.

On connait en effet une telle faucheuse dont les cylindres de palier sont soudés au couvercle du carter. Chaque arbre d'un organe de coupe rotatif entraîné par le bas, est guidé en rotation dans son cylindre de palier correspondant au moyen d'un palier constitué par deux roulements. La roue, solidaire de chacun de ces arbres, est une roue dentée cylindrique qui engrène avec d'autres roues dentées cylindriques. Avec cette faucheuse connue, il est nécessaire, lors d'une intervention sur un palier par exemple, d'ouvrir tout le carter. Pour ce faire, il faudra tout d'abord démonter le carter du châssis de la faucheuse, vidanger le lubrifiant qu'il contient, servant à la lubrification des roues dentées cylindriques, ouvrir ledit carter, procéder à la réparation, refermer ledit carter, remettre la quantité nécessaire de lubrifiant et enfin remonter ledit carter sur le châssis. Il est évident qu'une telle invervention ne peut se faire qu'en atelier. Ceci nécessite en conséquence, une immobilisation de la machine relativement longue et occasionne des frais de réparation très importants.

En sus, il n'est pas non plus possible de bien organiser le montage de cette faucheuse connue. En effet, avec cette construction, il n'est pas possible de prémonter des petits sous-ensembles, de sorte que le montage de cette faucheuse ne peut pas être fait de manière économique.

Le but de la présente invention est, en conséquence, de modifier les faucheuses connues de telle sorte, que leur montage puisse être fait de manière économique et que les interventions ultérieures puissent être réalisées très rapidement et sans occasionner de frais importants.

Dans ce but, la faucheuse selon l'invention est caractérisée par le fait que le plus petit diamètre de l'alésage du cylindre de palier est supérieur au diamètre extérieur de la roue fixée sur l'arbre, de telle sorte que l'ensemble prémonté arbre - roue - palier puisse être monté dans l'alésage du cylindre de palier et démonté dudit alésage.

Grâce à cette caractéristique, le montage de la faucheuse selon l'invention peut être fait de manière très économique. En effet, l'ensemble arbre - roue - palier qui représente une petite unité, peut être prémonté avant le montage final. Comme cet ensemble est compact, ce prémontage peut même être automatisé.

Lorsqu'au cours du travail, il arrive un incident sur un ensemble arbre - roue - palier, il suffira de démonter cet ensemble défectueux du cylindre de palier, puis de le remplacer par un nouvel ensemble. Compte tenu de la simplicité de cette intervention, celle-ci peut être réalisée dans le champ même. Ceci immobilisera donc la machine pendant un temps très limité, ce qui est capital pendant la période de récolte au cours de laquelle les pertes de temps ne sont pas tolérables, et occasionnera des frais très modestes.

Selon une réalisation préférée, le palier qui guide en rotation l'arbre de l'organe de coupe rotatif correspondant, comporte une boîte à roulement et au moins un roulement. Avantageusement, le ou les roulements sont montés dans la boîte à roulement de manière indémontable.

Selon une caractéristique supplémentaire, le montage comporte des moyens qui permettent un réglage sensiblement continu du jeu de fonctionnement des moyens de transmission tels que couples de roues dentées par exemple. Avec cette caractéristique, il est possible sans augmenter les coûts de montage, de régler de manière précise le jeu de fonctionnement des moyens de transmission. Un réglage précis de ce jeu de fonctionnement entraîne notamment une durée de vie plus importante des moyens de transmission et un abaissement du niveau sonore lors du fonctionnement de la faucheuse.

Selon une forme de réalisation, les moyens qui permettent ce réglage sont constitués par au moins un organe que l'on déforme lors du montage du palier dans le cylindre de palier.

Selon une autre forme de réalisation, c'est le palier qui comporte sur sa surface extérieure une partie au moins qui est filetée, et qui collabore avec une partie filetée de l'alésage du cylindre de palier. Cette dernière forme de réalisation permet d'avoir une plage importante de réglage. Le réglage est d'autant plus fin que le pas de filetage est fin.

Avantageusement, la surface extérieure du palier comporte une partie non filetée qui se centre dans une partie non filetée du cylindre de palier. Cette disposition permet d'avoir un bon centrage de l'arbre de l'organe de coupe rotatif dans le cylindre de palier.

Selon une réalisaition préférée, les parties non filetées du palier et du cylindre de palier coopèrent avant que les parties filetées dudit palier et dudit cylindre de palier ne commencent à être en prise. Cet agencement permet de visser aisément le palier dans le cylindre de palier. En effet, comme le palier est déjà centré dans le cylindre de palier avant le vissage, tout tâtonnement, pour amener la partie filetée du palier et celle du cylindre de palier en face l'une de l'autre pour que le vissage puisse effectivement être entrepris, est éliminé.

Par ailleurs, les parties filetées du palier et du cylindre de palier sont agencées de telle manière qu'elles ne peuvent pas être amenées en prise l'une avec l'autre lorsque, au cours du montage, les moyens de transmission tels que le couple de roues dentées par exemple, ne sont pas en prise. Cette caractéristique est très avantageuse au niveau du montage. En effet, elle permet l'emploi de machines visseuses sans risquer de bloquer le palier dans le cylindre de palier alors que les moyens de transmisson ne sont pas en prise. Cette caractéristique réduit donc les aléas au montage et corrélativement également les coûts de montage.

Selon une caractéristique supplémentaire, après montage du palier dans le cylindre de palier, des moyens condamnent le rotation relative entre ledit palier et ledit cylindre de palier.

Ces moyens sont particulièrement efficaces lorsqu'ils sont constitués par au moins un organe du palier qui collabore avec un organe du cylindre de palier.

Avantageusement ces organes sont amenés en collaboration par déformation de l'un et/ou de l'autre.

Cet agencement permet ainsi de maintenir précisément le jeu de fonctionnement des moyens de transmission sans entraîner des coûts de montage élevés.

Selon une caractéristique supplémentaire, le palier est muni de moyens de prise qui permettent son vissage et son dévissage.

Suivant une forme de réalisation, ces moyens sont constiutés par au moins un creux aménagé dans la face supérieure du palier. Il est ainsi possible de pouvoir démonter le palier avec un outil de frappe tel qu'un marteau, sans risquer de casser lesdits moyens de prise.

Suivant une autre forme de réalisation, les moyens de prise sont constitués par une partie centrale qui émerge à la face supérieure du palier et qui a une surface extérieure non circulaire et de préférence polygonale.

Selon une caractéristique supplémentaire, des moyens d'étanchéité empêchent les fuites de lubrifiant entre le palier et le cylindre de palier.

D'autres caractéristiques de la faucheuse selon l'invention sont contenues dans les autres sous-revendications et apparaîtront ci-après plus en détail dans la description suivante d'une forme de réalisation non limitative en référence au dessin annexé sur lequel :

- La figure 1 représente une vue de dessus de la barre de coupe de la faucheuse selon l'invention.

- La figure 2 représente une vue arrière en coupe selon le plan II-II défini sur la figure 1.

- La figure 3 représente une vue de dessus à une échelle agrandie de la barre de coupe sans disques.

- La figure 4 représente une vue latérale en coupe selon le plan IV-IV défini sur la figure 3.

- La figure 5 représente une vue arrière partiellement en coupe des extrémités de la barre de coupe.

- La figure 6 représente la méthode de formation d'un épaulement pour maintenir le roulement d'un disque dans la boîte à roulement.

- La figure 7 représente une autre forme de réalisation du palier qui guide en rotation un disque.

- La figure 8 représente une vue en coupe d'une autre forme de réalisation d'une boîte à roulement.

- La figure 9 représente une vue de dessus de la boîte à roulement de la figure 8.

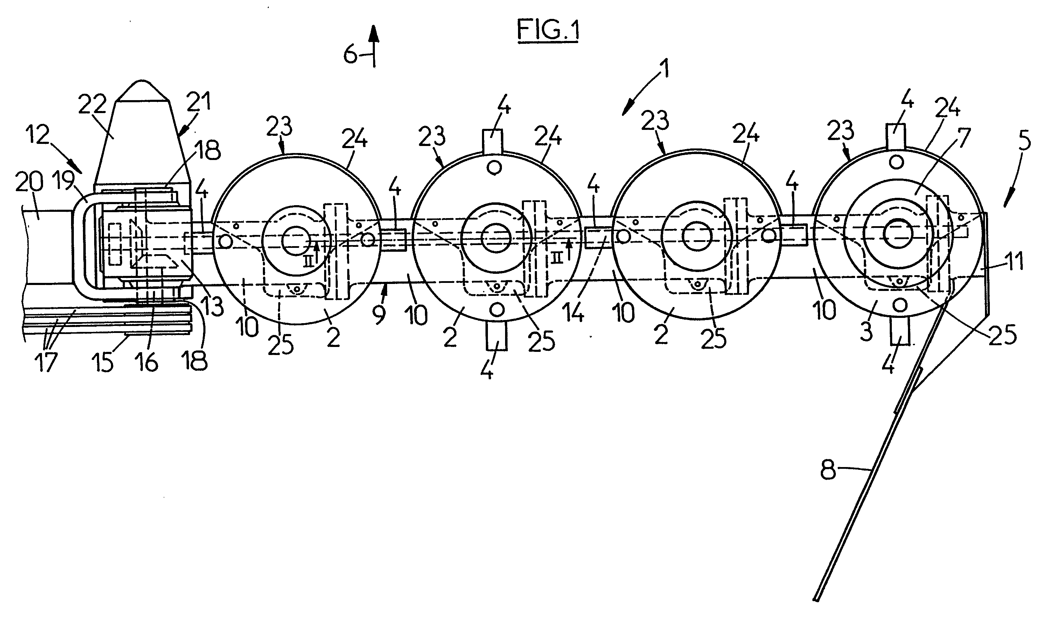

Sur la figure 1, est représentée une faucheuse ou plus précisément la barre de coupe (1) d'une faucheuse. Cette barre de coupe (1) comporte quatre disques (2,3) tournant chacun autour d'un axe dirigé vers le haut. Chaque disque (2, 3) est muni de deux outils de coupe (4) qui sont montés diamétralement opposés sur la bordure extérieure du disque. De préférence, le montage des outils de coupe (4) sur les disques (2, 3) est réalisé de sorte que lesdits outils de coupe (4) s'étendent vers l'extérieur sous l'effet de la force centrifuge, et qu'ils puissent pivoter vers l'arrière lorsqu'ils rencontrent un obstacle lors de leur rotation. Le disque (3) situé à l'extrémité droite (5) de la barre de coupe (1), vue dans le sens de travail défini par la flèche (6), est surmonté d'une coiffe (7). Cette coiffe (7) collabore avec un dispositif de réduction de l'andain de fourrage coupé tel que la planche à andains (8) par exemple, de sorte que l'andain de fourrage coupé soit séparé du fourrage encore sur pied.

Les disques (2, 3) sont guidés en rotation dans un carter (9) disposé sous lesdits disques. Ce carter (9), tel qu'il sera expliqué plus loin plus en détail, est formé par une succession de modules (10). A l'extrémité droite (5) de la barre de coupe (1), le carter (9) est muni d'un module d'extrémité (11) qui s'étend sensiblement jusqu'à la trajectoire extérieure décrite par le disque (3), ou légèrement au-delà de ladite trajectoire. A l'extrémité gauche (12), le carter (9) est muni d'un carter de renvoi (13).

Dans le carter (9) sont logés des moyens de transmission tels qu'un arbre de transmission (14) qui collabore avec des roues dentées par exemple, en vue d'entraîner en rotation les disques (2, 3). L'entraînement en rotation de ces moyens de transmission est réalisé par l'intermédiaire d'un mécanisme d'entraînement logé dans le carter de renvoi (13) et qui sera décrit ultérieurement plus en détail. Ce mécanisme d'entraînement reçoit le mouvement d'une poulie (15) calée sur l'axe (16). La poulie (15) est entraînée en rotation au moyen d'une autre poulie non représentée par l'intermédiaire de courroies (17). Cette autre poulie est, d'une manière connue de l'homme de l'art, entraînée par la prise de force d'un tracteur non représenté auquel est attelée la faucheuse, par l'intermédiaire d'un arbre à joints universels non représenté.

Le carter de renvoi (13) comporte deux portées cylindriques (18) sensiblement concentriques avec l'axe (16) d'entrée dudit carter de renvoi (13). Ces portées cylindriques (18) supportent une chape (19) fixée à un châssis (20) par l'intermédiaire duquel la faucheuse est attelée au tracteur. Avec cet agencement, la barre de coupe (1) peut suivre les dénivellations du sol en pivotant autour de l'axe des portées cylindriques (18) sans que les divers organes d'entraînement ne soient soumis à des contraintes supplémentaires. Par ailleurs, il est possible de pivoter la barre de coupe (1) dans une position sensible ment verticale pour réduire la largeur de la faucheuse au transport.

A l'extrémité (12) du carter (9) et sous celui-ci ou plus précisément sous le carter de renvoi (13), est agencé un sabot (21) qui a une partie avant (22) relevée comme l'avant d'un ski. Ce sabot (21) permet à la faucheuse de glisser sur le sol et d'éviter les accrochages de fourrage coupé au carter de renvoi (13).

A l'avant, sous chaque disque (2, 3), le carter (9) est muni de patins protecteurs de disque (23). Ces patins protecteurs de disque comportent une partie frontale (24) présentant en vue de dessus une forme sensiblement circulaire dont le rayon est plus grand que le rayon de la trajectoire extrême des disques (2, 3) mais plus petit que le rayon de la trajectoire extrême des outils de coupe (4). Par ailleurs, lesdits patins protecteurs de disque (23) comportent une partie arrière (25) en forme de patin, sur laquelle repose également la barre de coupe (1).

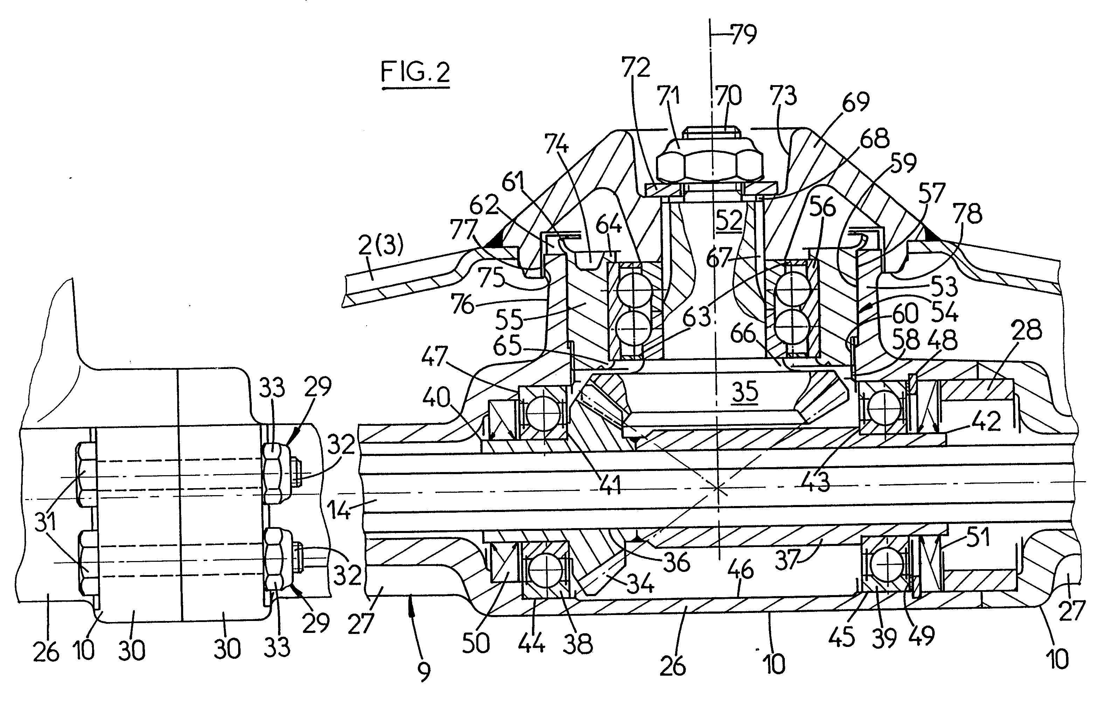

Sur la figure 2, on voit une coupe de la barre de coupe (1). Comme dit plus haut, le carter (9) comporte une pluralité de modules (10). Chaque module (10) supporte un disque (2, 3). Le module (10) se compose d'un boîtier (26) dans lequel est guidé en rotation ledit disque (2, 3), et d'une entretoise (27) qui s'étend entre ce boîtier (26) et le boîtier (26) d'un module (10) adjacent. Avantageusement, l'entretoise (27) d'un module (10) s'étend à gauche du boîtier (26) du même module, vu dans le sens d'avance de la machine au travail. Les différerents modules (10) sont centrés l'un par rapport à l'autre au moyen d'une bague de centrage (28) qui s'étend à la fois à l'intérieur de l'entretoise (27) d'un module (10) et à l'intérieur du boîtier (26) du module (10) adjacent. La bague de centrage (28) a une longueur telle qu'elle puisse absorber une partie des efforts de flexion qui s'exercent sur la barre de coupe (1) pendant le tra vail et pendant le transport. Les différents modules (10) sont liés l'un à l'autre au moyen d'organes d'assemblage (29). Pour ce faire, chaque module (10) comporte à chacune de ses extrémités une bride (30). Les brides (30) de deux modules (10) adjacents sont liées entre elles par les organes d'assemblage (29) qui sont constitués, dans l'exemple de réalisation décrit, par des vis (31) dont la tige (32) traverse les deux brides (30) adjacentes, et par des écrous (33) vissés sur lesdites tiges (32). Les brides (30) ont chacune une certain largeur de sorte que la longueur des vis (31) soit suffisante pour leur permettre d'encaisser les solliciations auxquelles elles sont soumises.

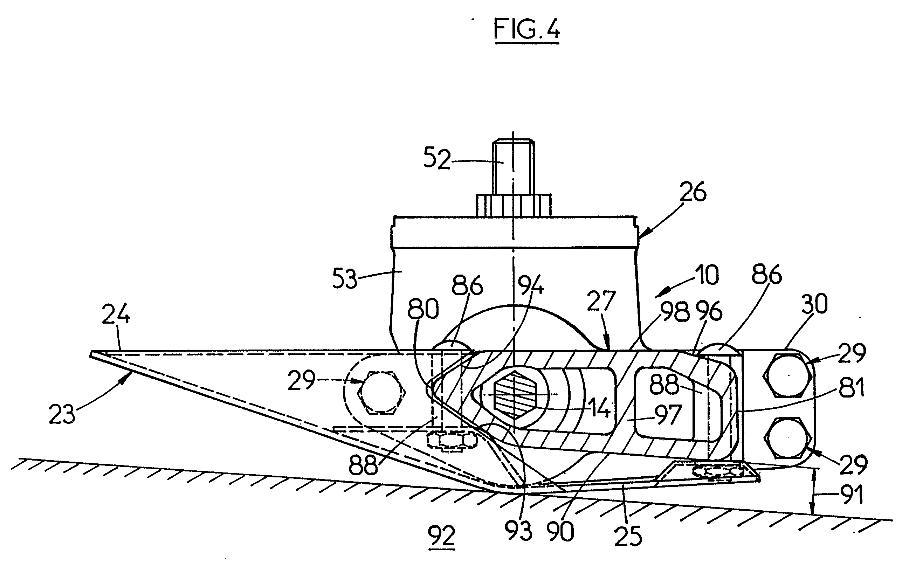

Le carter (9) ainsi formé, contient un arbre de transmission (14). En traversant chaque boîtier (26), l'arbre de transmission (14) collabore avec un couple de roues dentées coniques (34, 35) en vue de transmettre le mouvement au disque (2, 3) correspondant. Pour ce faire, l'arbre de transmission (14) traverse l'alésage (36) de la roue dentée (34) qui possède la forme complémentaire de celle de l'arbre de transmission (14). Dans l'exemple décrit, l'arbre de transmission (14) a une section hexagonale (voir figure 4). Il est cependant possible que l'arbre ait une section d'une autre forme dès lors que cette forme permet un entraînement en rotation. De même, il est possible que l'arbre de transmission (14) ne présente la forme permettant l'entraînement en rotation que dans la zone où il collabore avec la roue dentée (34).

La roue dentée (34) est solidaire d'un fourreau (37) qui entoure également l'arbre de transmission (14). L'ensemble roue dentée (34) - fourreau (37) est guidé en rotation dans le boîtier (26) au moyen de deux paliers tels que des roulements à billes (38, 39). Pour ce faire, la roue dentée (34) comporte une portée cylindrique (40) sur laquelle est monté le roulement (38) qui bute contre un épaulement (41) de la roue dentée (34). Le fourreau (37), quant à lui, possède à son extrémité éloignée de la roue dentée (34), également une portée cylindrique (42) sur laquelle est monté le roulement (39) qui bute contre un épaulement (43) du fourreau (37). Les roulements (38, 39) sont ainsi montés sur l'ensemble roue dentée (34) - fourreau (37) de sorte que la denture de la roue dentée (34) soit située entre les deux roulements (38, 39).

Avantageusement, le diamètre extérieur des roulements (38, 39) est le même, ce qui présente des avantages au niveau de la réalisation des portées extérieures (44, 45) usinées dans le boîtier (26). De même, la longueur desdites portées extérieures est réduite au juste minimum en vue de diminuer les temps d'usinage et faciliter le montage. Pour cela, la partie (46) du boîtier (26) située entre les portées extérieures (44, 45) possède un diamètre plus grand que le diamètre des portées (44, 45). Le maintien en translation de l'ensemble roue dentée (34) -fourreau (37) dans le boîtier (26) est réalisé d'une part par un épaulement (47) aménagé dans le boîtier (26), et d'autre part par un organe d'arrêt tel que le circlips (48). Entre le roulement (39) et l'organe d'arrêt (48), on a disposé des rondelles d'épaisseur (49) qui permettent au montage de diminuer ou d'éliminer le jeu axial résultant des différentes tolérances dimensionnelles.

Comme le boîtier (26) contient un lubrifiant, on a agencé sur les portées cylindriques (40, 42) de la roue dentée (34) respectivement du fourreau (37) des organes d'étanchéité tels que les bagues d'étanchéité (50, 51) qui agissent entre le boîtier (26) et l'ensemble roue dentée (34) - fourreau (37). Les deux organes d'étanchéité (50, 51) sont disposés de sorte que les deux roulements (38, 39) et la denture de la roue dentée (34) soient situés entre les deux organes d'étanchéité (50, 51). Avec cet agencement, le boîtier (26) reste donc étanche indé pendamment de la présence de l'arbre de transmission (14).

La roue dentée (34) engrène avec la roue dentée (35) qui est solidaire d'un arbre de disque (52). L'arbre de disque (52) est guidé en rotation dans un cylindre de palier (53) au moyen d'un palier (54) qui se compose, dans l'exemple de réalisation décrit, d'une boîte à roulement (55) et d'un roulement (56). Comme visible sur la figure 2, le cylindre de palier (53) fait partie intégrante du boîtier (26) donc du module (10). L'alésage intérieur du cylindre de palier (53) comporte une partie lisse (57) et une partie filetée (58). De même, la surface extérieure du palier (54) comporte également une partie lisse (59) et une partie filetée (60). Le filetage des parties filetées (58, 60) est avantageusement un filetage à pas fin.

Grâce aux parties lisses (57 et 59) le palier (54) est centré dans le cylindre de palier (53), et grâce aux parties filetées (58, 60), ledit palier (54) est maintenu en translation dans ledit cylindre de palier (53).

Afin que le palier (54) ne puisse tourner une fois qu'il a été vissé dans le cylindre de palier (53), ledit palier (54) est muni à sa partie supérieure d'une couronne cylindrique mince (61) qui est partiellement déformée pour collaborer avec au moins une encoche (62) aménagée dans la partie supérieure du cylindre de palier (53). La boîte à roulement (55) supporte le roulement (56) qui est centré dans l'alésage de ladite boîte à roulement. Ce roulement est dans l'exemple décrit, un roulement à double rangée de billes à contact oblique. Il est muni de moyens d'étanchéité intégrés (63). Le roulement (56) est maintenu en translation dans la boîte à roulement (55) au moyen de deux épaulements (64, 65). L'épaulement (64) est réalisé par usinage tandis que l'épaulement (65) est réalisé après montage du roulement (56) d'une manière qui sera expliquée plus loin.

L'ensemble arbre de disque (52) - roue dentée (35) est centré dans l'alésage du roulement (56) dont la bague intérieure bute contre l'épaulement (66) de la roue dentée (35). Près de son extrémité libre, l'arbre de disque (52) est muni de cannelures (67) qui collaborent, en vue de l'entraînement en rotation du disque (2, 3) avec des cannelures (68) aménagées dans un entraîneur (69) solidaire du disque (2, 3). Dans le but de fixer le disque (2, 3) sur l'arbre de disque (52), ce dernier se termine par une partie filetée (70) qui s'étend au-dehors de l'entraîneur (69), et sur laquelle est vissé un écrou (71) après interposition d'une rondelle (72). En vissant l'écrou (71) sur la partie filetée (70), on bloque le roulement (56) entre l'épaulement (66) et l'entraîneur (69). Afin de protéger l'écrou (71) contre l'usure, celui-ci est logé dans un évidement (73) aménagé dans la partie supérieure de l'entraîneur (69).

Le montage d'un boîtier (26) s'effectue de la manière suivante. On prémonte d'abord l'ensemble roue dentée (34) - fourreau (37) c'est-à-dire qu'on monte sur la partie cylindrique (40) le roulement (38) puis l'organe d'étanchéité (50), et sur la partie cylindrique (42) le roulement (39). L'ensemble ainsi prémonté est alors enfilé dans le boîtier (26) jusqu'à ce que le roulement (38) bute contre l'épaulement (47). On met ensuite en place le nombre de rondelles d'épaisseur (49) nécessaire et on verrouille axialement l'ensemble à l'aide de l'organe d'arrêt (48). Le boîtier (26) est alors rendu étanche en montant l'organe d'étanchéité (51). On prémonte ensuite l'ensemble roue dentée (35) - arbre de disque (52) - palier (54) . Pour ce faire, on monte le palier (54) sur l'arbre de disque (52) jusqu'à ce qu'il bute sur l'épaulement (66). On monte ensuite cet ensemble dans le cylindre de palier (53). Ceci est possible car le plus petit diamètre de l'alésage du cylindre de palier (53) est plus grand que le diamètre extérieur de la roue dentée (35). Avantageusement, lors du montage, le palier (54) se centre d'abord dans le cylindre de palier (53) par l'intermédiaire des parties lisses (57, 59) avant que les parties filetées (58, 60) ne puissent être vissées l'une dans l'autre. On s'assure ainsi que les deux parties filetées (58, 60) sont en face l'une de l'autre, ce qui permet d'éviter les tâtonnements lors de d'amorce du vissage. En sus, les parties filetées (58, 60) sont disposées de telle façon dans le boîtier (26) respectivement sur le palier (54), par rapport aux roues dentées (34, 35), pour que lesdites parties filetées (58, 60) ne puissent pas être amenées en prise lorsqu'une dent de la roue dentée (35) bute sur une dent de la roue dentée (34). Le vissage ne pourra alors être effectué que lorsqu'une des roues dentées aura été légèrement tournée par rapport à l'autre. A mesure qu'on visse alors le palier (54) dans le cylindre de palier (53), on rapproche la roue dentée (35) de la roue dentée (34). Lorsque la roue dentée (35) occupe la bonne position par rapport à la roue dentée (34), c'est-à-dire que le jeu de fonctionnement correct entre les deux roues est atteint, on arrête le vissage du palier (54) dans le cylindre de palier (53). Pour maintenir cette position, on déforme une partie de la couronne cylindrique mince (61) pour la faire pénétrer dans au moins une encoche (62). On remarquera que pour faciliter le vissage et le dévissage ultérieur lors d'une intervention, le palier (54) est muni d'au moins un moyen de prise tel que le creux (74). Etant donné que le palier (54) n'est pas centré dans le cylindre de palier (53) avec serrage, et selon la nature du lubrifiant contenu dans le boîtier (26), il peut s'avérer nécessaire d'empêcher ledit lubrifiant de fuir entre ledit palier (54) et ledit cylindre de palier (53). Pour ce faire, il est possible de disposer entre ces deux pièces des moyens d'étanchéité, tels qu'une colle par exemple déposée entre le palier (54) et le cylindre de palier (53).

Dans le montage représenté sur la figure 2, la roue dentée (34) s'étend à gauche de l'arbre de disque (52). Cette position définit donc un sens de rotation du disque correspondant. Pour un disque qui tourne dans le sens contraire, le montage devra donc être fait de sorte que la roue dentée (34) correspondante s'étende à droite de l'axe de disque (52), l'arbre de transmission (14) tournant toujours dans le même sens. Dans ce cas, le montage de l'ensemble roue dentée (34) - fourreau (37) dans le boîtier (26) correspondant se fera de la manière suivante. L'organe d'étanchéité (50) sera monté sur la partie cylindrique (42) et l'ensemble sera enfilé dans le boîtier (26) fourreau (37) d'abord, jusqu'à ce que le roulement (39) bute contre l'épaulement (47). On monte ensuite le nombre nécessaire de rondelles d'épaisseur (49) et on verrouille axialement à l'aide de l'organe d'arrêt (48). Enfin, on monte l'organe d'étanchéité (51). Dans ce cas, le montage de l'ensemble roue dentée (35) - arbre de disque (52) -palier (54) ainsi que le réglage du jeu de fonctionnement entre les roues dentées (34, 35) restent identiques à ceux décrits plus hauts.

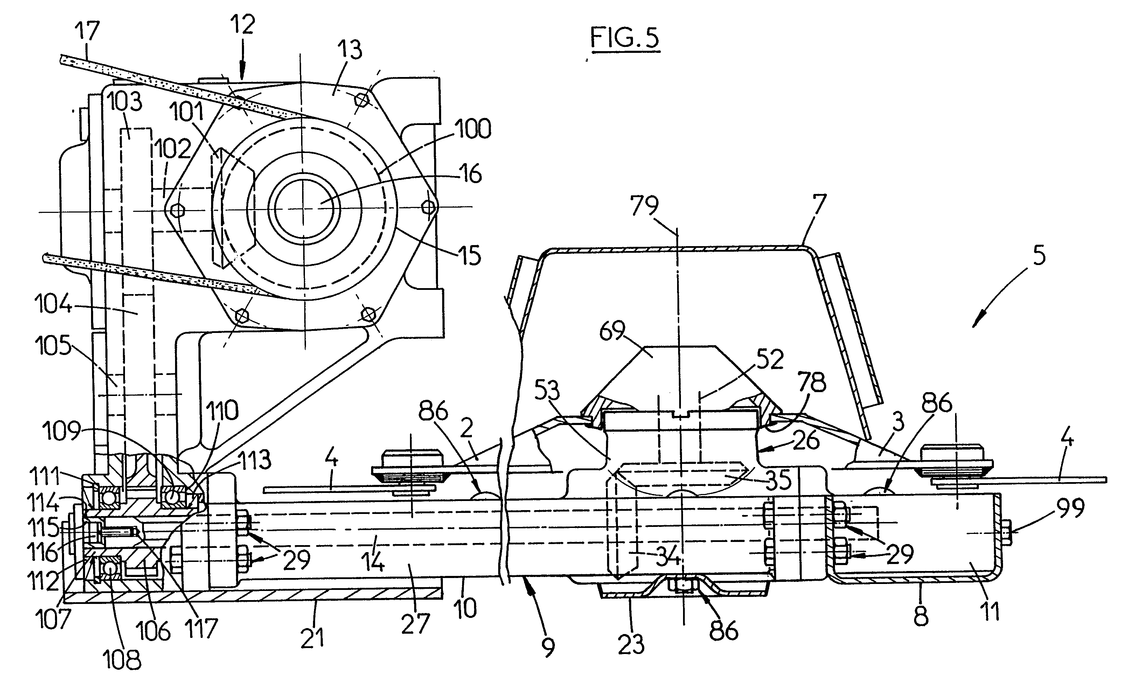

Dans le but de limiter l'enroulement et l'introduction de brins de fourrage ou de corps filiformes autour du cylindre de palier (53) respectivement dans le cylindre de palier (53), la surface extérieure de ce dernier comporte deux zones (75 et 76). La zone (75) est située dans la partie supérieure de la surface extérieure du cylindre de palier (53) et s'étend à l'intérieur d'un alésage (77) réalisé dans l'entraîneur (69). Le diamètre de l'alésage (77) est légèrement plus grand que le diamètre de la zone (75) en vue de former une chicane. La zone (76) s'étend à partir de la zone (75) vers le bas, et a un diamètre plus petit que celui de la zone (75). De plus la longueur de la zone (76) est relativement importante. Avantageusement, la surface inférieure (78) de l'entraîneur (69) s'étend sensiblement dans le voisinage de la frontière entre les zones (75 et 76) et préférentiellement légèrement plus haut que ladite frontière. Avantageusement également, la surface inférieure (78) de l'entraîneur (69) peut s'étendre depuis le voisinage de la frontière entre les zones (75 et 76) vers l'extérieur et vers le haut. Un exemple de réalisation d'un tel agencement est représenté sur la figure 5 où la surface inférieure (78) de l'entraîneur (69) est sensiblement conique. Avec cet agencement, on diminue substantiellement les risques d'enroulement de brins de fourrage ou de corps filiformes car l'espace entre les endroits fixes où les brins de fourrage ou les corps filiformes pourraient s'accrocher et le disque tournant, est relativement grand. Par ailleurs, si un tel enroulement arrivait à se produire, il ne pourrait pas pénétrer dans la chicane formée entre le cylindre de palier (53) et l'entraîneur (69). En effet, lorsque l'enroulement arrive à la frontière des deux zones (75 et 76) et compte tenu de la rapidité avec laquelle cet enroulement progresse car la vitesse de rotation des disques est élevée, il a tendance à se propager vers l'extérieur et fermer l'angle formé entre le cylindre de palier (53) et l'entraîneur (69). Cette tendance à se propager vers l'extérieur est générée par la différence de diamètre entre les deux zones (75 et 76).

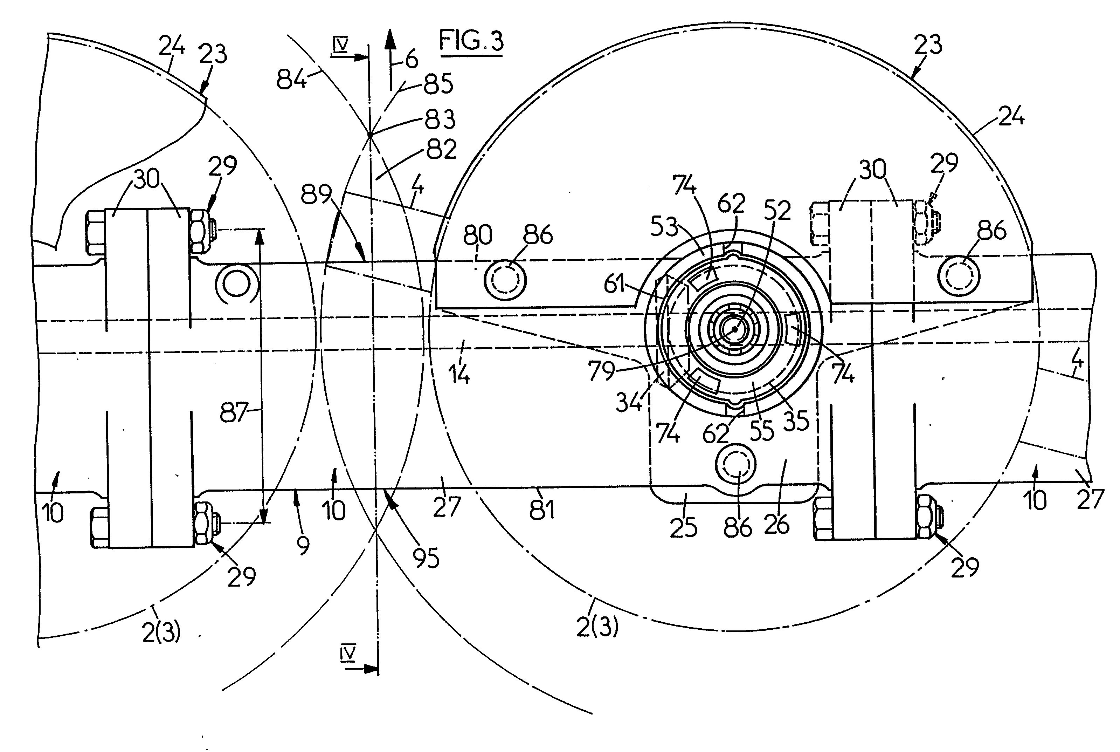

La figure 3 montre une vue de dessus de la barre de coupe (1). Pour plus de clarté, les disques (2, 3) ont été dessinés en traits mixtes. Sur cette figure, on voit que l'axe (79) du cylindre de palier (53) qui correspond également à l'axe de rotation du disque (2, 3) correspondant est situé plus près du bord avant (80) du carter (9) que du bord arrière (81) de ce carter. De ce fait, le triangle de surcoupe (82) qui est défini par le point d'intersection avant (83) des trajectoires extrêmes (84, 85) décrites par les outils de coupe (4) de deux disques adjacents, et le bord avant (80) du carter (9), est très grand. Ceci permet de garantir une bonne coupe du fourrage entre deux disques adjacents.

Au niveau de chaque cylindre de palier (53), s'étend le patin protecteur de disque (23). Ce patin protecteur de disque (23) comporte, comme dit plus haut, une partie frontale (24) ayant une forme sensiblement circulaire et sensiblement centrée sur l'axe (79). Le patin protecteur de disque (23) est fixé sur le carter (9) au moyen d'un certain nombre d'organes de fixation (86), trois dans l'exemple décrit. Ces organes de fixation (86) s'étendent près du bord avant (80) et du bord arrière (81) du carter (9).

De même, les organes d'assemblage (29) qui lient les différents modules (10) entre eux, s'étendent également à l'avant et à l'arrière des brides (30). Avantageusement, la distance (87) entre les organes d'assemblage (29) qui s'étendent à l'avant, et ceux qui s'étendent à l'arrière, est relativement grande pour que la liaison entre les modules (10) soit très résistante.

Sur la figure 3, on voit encore la manière selon laquelle le couronne cylindrique mince (61) du palier (54) est déformée pour pénétrer dans les encoches (62) du cylindre de palier (53) pour condamner la rotation du palier (54). On remarquera que pour une intervention au niveau du boîtier (26), il suffira de dégager la couronne cylindrique mince (61) des encoches (62) du cylindre de palier (53) pour pouvoir dévisser le palier (54).

La figure 4 montre une coupe transversale de la barre de coupe (1). Sur cette figure, on voit que les patins protecteur de disque (23) s'emboîtent partiellement sur le bord avant (80) du carter (9). Les organes de fixation (86) qui fixent ces patins protecteur de disque (23) sur le carter (9), traversent ledit carter (9) qui comporte à cet effet des bossages percés (88).

Le bord avant (80) de l'entretoise (27) a une forme relativement pointue. Grâce à cette forme, on diminue les risques de collage de terre ou de débris végétaux audit bord avant (80), ce qui diminuerait la qualité de la coupe. Il est à noter que l'entretoise (27) présente cette forme pointue au moins dans la zone (89) qui s'étend entre deux disques (2, 3) voisins là où les outils de coupe (4) passent au-dessus du carter (9) pendant leur rotation (voir figure 3).

Par ailleurs, la face inférieure (90) de l'entretoise (27) s'étend à une certaine distance (91) de la surface du sol (92). Ainsi, la terre et/ou les débris végétaux éventuellement raclés par l'avant du carter (9), peuvent s'échapper sous le carter (9). Il est à noter que cet espace entre la face inférieure (90) de l'entretoise (27) et la surface du sol (92) s'étend de préférence sur toute la longueur de l'entretoise (27).

Afin de bien canaliser la terre et/ou les débris végétaux vers ledit espace, le bord avant (80) de l'entretoise (27) possède avantageusement un plan incliné (93) dirigé vers l'arrière et vers le bas. Ce plan incliné (93) s'étend au moins dans la zone (89) du bord avant (80).

Le bord avant (80) possède également un plan incliné (94) dirigé vers le haut et vers l'arrière. Avec cette forme, le choc entre un outil de coupe (4) accidentellement plié vers le bas et le bord avant (80) est atténué. De plus, compte tenu de la vitesse de rotation, le plan incliné (94) peut quelque peu redresser un outil de coupe (4) plié.

Pour que le carter (9) soit capable de bien encaisser le choc occasionné par un outil de coupe (4) plié et pour diminuer les risques d'entaillage du carter (9) lors d'un tel choc, la partie supérieure du bord avant (80) au moins possède une épaisseur de matière plus importante que le reste de la section de l'entretoise (27). Il est à noter que le plan incliné (94) et l'endroit où l'épaisseur de matière est plus importante s'étendent au moins dans la zone (89) (voir figure 3). Lorsqu'un outil de coupre (4) plié vers le bas n'a pu être entièrement redressé il peut alors frapper le bord arrière (81) du module (10) adjacent dans la zone (95) au-dessus de laquelle il passe lors de sa rotation vers le carter (9). Pour atténuer également dans ce cas le choc, le bord arrière (81) de l'entretoise (27) possède au moins dans la zone (95), un plan incliné (96) dirigé vers l'avant et vers le haut. De même, comme pour le bord avant (80), l'epaisseur de matière dans cette zone est également plus importante que dans le reste de la section transversale de l'entretoise (27).

Dans le but de rigidifier le profil de l'entretoise (27), il est possible d'agencer au moins une nervure (97) qui relie la face inférieure (90) à la face supérieure (98) de l'entretoise (27). Cette nervure (97) peut même se prolonger dans le boîtier (26) et relier les deux brides (30) d'un module (10).

La figure 5 montre les extrémités (5) et (12) de la barre de coupe (1).

A l'extrémité (5), la barre de coupe (1) comporte, comme dit précédemment, un module d'extrémité (11) qui ferme l'extrémité (5) de la barre de coupe (1). Ce module d'extrémité (11) s'étend jusqu'à la trajectoire extrême du disque (3) ou légèrement au-delà. Ainsi, le module d'extrémité (11) peut protéger, dans une certaine mesure, latéralement le disque (3). La planche à andains (8) est fixée sur le module d'extrémité (11) à l'aide des organes d'assemblage (29) qui fixent ledit module d'extrémité (11) sur le module (10) qui supporte le disque (3), et à l'aide d'organes de liaison (99).

A l'extrémité (12) s'étend le carter de renvoi (13). Comme dit plus haut, le carter de renvoi (13) contient un mécanisme d'entraînement qui transmet le mouvement de la poulie (15) à l'arbre de transmission (14). Ce mécanisme d'entraînement se compose des organes suivants. Une roue dentée (100) est calée sur l'axe (16) sur lequel est également calée la poulie (15). Cette roue dentée (100) engrène avec une roue dentée (101) qui est calée sur un axe (102) lequel s'étend sensiblement perpendiculairement à l'axe (16) et sensiblement parallèlement à l'arbre de transmission (14). Sur l'axe (102) est également calée une roue dentée cylindrique (103) qui engrène avec une autre roue dentée cylindrique (104) calée sur un axe (105). L'axe (105) s'étend sensiblement parallèlement à l'axe (102). Cette roue dentée cylindrique (104) engrène avec une troisième roue dentée cylindrique (106) calée sur l'arbre de transmission (14). Les axes (102 et 105) sont guidés en rotation dans le carter de renvoi (13) au moyen de paliers tels que des roulements connus de l'homme de l'art. La roue dentée cylindrique (106) comporte une partie cylindrique (107) qui s'étend concentriquement de part et d'autre de sa denture et qui sert de portée à des paliers tels que les roulements (108, 109) guidant en rotation ladite roue dentée (106). L'arrêt en translation de la roue dentée (106) est réalisé au moyen d'un épaulement (110) aménagé dans le carter de renvoi (13) et d'un circlips (111). Le carter de renvoi (13) comporte également à sa base des organes d'étanchéité (112, 113) qui s'étendent entre les parois dudit carter de renvoi (13) et la partie cylindrique (107) afin de rendre le carter de renvoi étanche indépendamment de la présence de l'arbre de transmission (14). La partie cylindrique (107) comporte un alésage (114) ayant la forme complémentaire de celle de l'arbre de transmission (14), en vue de coopérer avec cet arbre de transmission (14) qui s'étend partiellement à l'intérieur dudit alésage (114). Afin de maintenir axialement l'arbre de transmission (14), l'ensemble roue dentée (106) - partie cylindrique (107) comporte un organe d'arrêt (115) qui est lié rigidement à cet ensemble ou tout au moins lié en translation par rapport à celui-ci. Une vis (116), dont la tête s'appuie sur l'organe d'arrêt (115) et dont la tige traverse ce dernier, est vissée dans un trou fileté (117) aménagé en bout de l'arbre de transmission (14).

Pour démonter l'arbre de transmission (14), il faut enlever la vis (116) pour libérer axialement l'arbre de transmission (14). On enlève ensuite le module d'extrémité (11) et on retire l'arbre de transmission (14) par l'extrémité (5) de la barre de coupe (1). Afin de pouvoir saisir l'arbre (14), celui-ci s'étend au-delà du dernier module (10) et peut même comporter à cet endroit des moyens de prise.

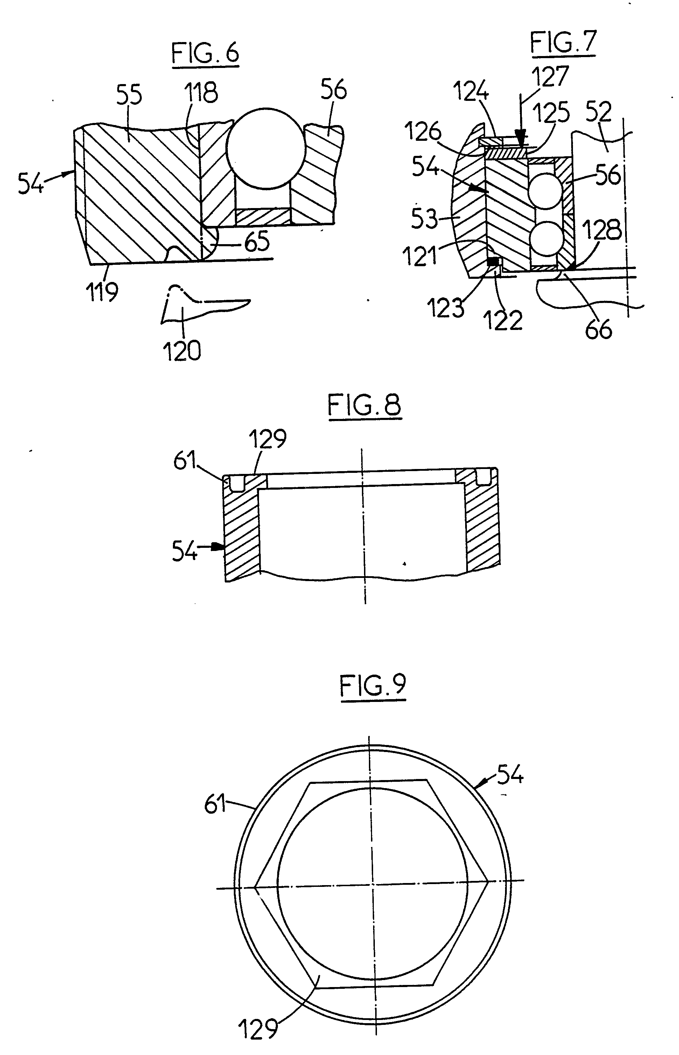

La figure 6 montre la manière de former l'épaulement (65). Avant montage l'alésage (118) de la boîte à roulement (55) débouche sur la face (119) de la boîte à roulement (55) tel que cela est représenté en traits mixtes. Après montage du roulement (56) dans l'alésage (118), on enfonce l'outil (120) dans la face (119), ce qui a pour effet de déformer l'endroit de l'alésage (118) qui débouche sur la face (119). La déformation provoque un déplacement de la matière vers l'axe de la boîte à roulement (55) qui maintient alors le roulement (56) dans ladite boîte à roulement (55).

La figure 7 montre une autre forme de réalisation du palier (54). Dans cet exemple, il s'agit d'un roulement (56) spécial, dont la bague extérieure a une dimension suffisante pour être centrée dans le cylindre de palier (53). La bague extérieure de ce roulement (56) comporte un épaulement (121). De même, l'alésage du cylindre de palier (53) comporte un épaulement (122). Entre les épaulements (121 et 122) est disposé un joint torique (123). Le roulement (56) est maintenu axialement dans le cylindre de palier (53) par l'intermédiaire des épaulements (121 et 122) et du joint torique (123), et par l'intermédiaire d'un circlips (124) après interposition d'une rondelle (125) et de rondelles d'épaisseur (126).

Le montage du palier (54) dans le cylindre de palier (53) et le réglage du jeu de fonctionnement des roues dentées (34, 35) s'effectuent dans ce cas comme suit. On monte le palier (54) dans le cylindre de palier (53) et on appuie sur le palier (54) ou la rondelle (125) pour écraser le joint torique (123) (l'opération de déformation du joint torique (123) est matérialisée par la flèche (127) ). Lorsque le jeu de fonctionnement correct des roues dentées (34, 35) est obtenu, on maintient la pression, on monte le nombre de rondelles d'épaisseur (126) nécessaire, et on met en place le circlips (124). Après relâchement de la pression, le palier (54) maintient sa position dans le cylindre de palier (53). Il est à noter que le joint torique (123) empêche également des fuites du lubrifiant contenu dans le boîtier (26), entre le palier (54) et le cylindre de palier (53).

Le joint torique (128) empêche la fuite de lubrifiant entre le palier (54) et l'arbre de disque (52).

Les figures 8 et 9 montrent une variante de réalisation des moyens de prise qui permettent le vissage ou le dévissage du palier (54). Ces moyens sont constitués par une partie centrale (129) qui émerge de la face supérieure du palier (54) et qui a une surface extérieure non circulaire et de préférence polygonale. Dans l'exemple représenté, cette surface extérieure est hexagonale. Il est ainsi possible d'employer une clé classique pour visser ou dévisser le palier (54).

Divers modifications ou perfectionnements des exemples décrits sont possibles sans pour autant sortir du cadre de l'invention.

En particulier, l'arbre de transmission (14) pourra être réalisé en plusieurs parties. Par ailleurs les zones de l'arbre de transmission (14) où celui-ci coopère avec une roue dentée (106, 34) pourront avoir une dimension nominale plus grande que le reste de l'arbre de transmission (14). En sus, le palier (54) pourrait également être un palier lisse.

## Revendications

1. Faucheuse comportant des organes de coupe rotatifs munis d'au moins un outil de coupe, au moins un desdits organes de coupe rotatifs étant entraîné par des moyens de transmission logés dans un carter situé sous lesdits organes de coupe rotatifs, lesdits moyens de transmission comportant une roue solidaire de l'arbre de l'organe de coupe rotatif entrainé par le bas qui est guidé en rotation dans un palier logé dans l'alésage d'un cylindre de palier faisant partie intégrante du carter, caractérisée par le fait que le plus petit diamètre de l'alésage du cylindre de palier (53) est supérieur au diamètre extérieur de la roue (35) fixée sur l'arbre (52), de telle sorte que l'ensemble prémonté arbre (52) -roue (35) - palier (54) puisse être monté dans l'alésage du cylindre de palier (53) et démonté dudit alésage .

2. Faucheuse selon la revendication 1, caractérisée par le fait que le palier (54) est démontable.

3. Faucheuse selon l'une au moins des revendications 1 ou 2, caractérisée par le fait que le palier (54) comporte une boîte à roulement (55) et au moins un roulement (56).

4. Faucheuse selon la revendication 3, caractérisée par le fait que le ou les roulements (56) sont montés dans la boîte à roulement (55) de manière indémontable.

5. Faucheuse selon la revendication 4, caractérisée par le fait que le ou les roulements (56) sont maintenus dans le boîte à roulement (55) par au moins un épaulement (65) obtenu par déformation de la boîte à roulement (55).

6. Faucheuse selon l'une au moins des revendications 1 à 5, caractérisée par le fait que le montage comporte des moyens (58, 60, 121, 122, 123) qui permettent un réglage sensiblement continu du jeu de fonctionnement des moyens de transmission (34, 35) tel qu'un couple de roues dentées par exemple.

7. Faucheuse selon la revendication 6, caractérisée par le fait que les moyens qui permettent le réglage du jeu de fonctionnement des moyens de transmission (34, 35), sont constitués par au moins un organe (123) que l'on déforme lors du montage du palier (54) dans le cylindre de palier (53).

8. Faucheuse selon l'une au moins des revendications 1 à 6, caractérisée par le fait que le palier (54) comporte sur sa surface extérieure une partie (60) au moins qui est filetée, et qui collabore avec une autre partie filetée (58) de l'alésage du cylindre de palier (53).

9. Faucheuse selon la revendication 8, caractérisée par le fait que le pas du filetage est un pas fin.

10. Faucheuse selon l'une au moins des revendications 8 ou 9, caractérisée par le fait que la surface extérieure du palier (54) comporte une partie non filetée (59) qui se centre dans une partie non filetée (57) du cylindre de palier (53).

11. Faucheuse selon la revendication 10, caractérisée par le fait que les parties non filetées (59, 57) du palier (54) et du cylindre de palier (53) coopèrent avant que les parties filetées (60, 58) dudit palier (54) et dudit cylindre de palier (53) ne commencent à être en prise.

12. Faucheuse selon l'une au moins des revendications 8 à 11, caractérisée par le fait que la partie filetée (58) du cylindre de palier (53) et la partie filetée (60) du palier (54) ne peuvent pas être amenées en prise l'une avec l'autre quand les moyens de transmission tels que le couple de roues dentées (34, 35) par exemple, ne sont pas en prise.

13. Faucheuse selon l'une au moins des revendications 8 à 12, caractérisée par le fait qu'après montage du palier (54) dans le cylindre de palier (53), des moyens (61, 62) condamnent la rotation relative entre ledit palier (54) et ledit cylindre de palier (53).

14. Faucheuse selon la revendication 13, caractérisée par le fait que les moyens (61, 62) qui condamnent la rotation relative entre le palier (54) et le cylindre de palier (53), sont constitués par au moins un organe (61) du palier (54) qui collabore avec un organe (62) du cylindre de palier (53).

15. Faucheuse selon la revendication 14, caractérisée par le fait que les organes (61, 62) du palier (54) et du cylindre de palier (53) qui doivent condamner la rotation relative du palier (54) par rapport au cylindre de palier (53), sont amenés en collaboration par déformation de l'un et/ou de l'autre des organes (61, 62).

16. Faucheuse selon la revendication 15, caractérisée par le fait que le palier (54) comporte une couronne cylindrique (61) à paroi relativement mince, et le cylindre de palier (53), au moins une encoche (62), et que la condamnation de la rotation relative entre le palier (54) et le cylindre de palier (53) est obtenue en déformant l'endroit de la couronne cylindrique (61) qui se trouve dans le voisinage de l'encoche (62),pour qu'il pénètre dans ladite encoche (62).

17. Faucheuse selon l'une au moins des revendications 8 à 16, caractérisée par le fait que le palier (54) est muni de moyens de prise (74, 129) qui permettent son vissage ou son dévissage.

18. Faucheuse selon la revendication 17, caractérisée par le fait que les moyens de prise sont constitués par au moins un creux (74) aménagé dans la face supérieure du palier (54).

19. Faucheuse selon la revendication 17, caractérisée par le fait que les moyens de prise sont constitués par une partie centrale (129) qui émerge à la face supérieure du palier (54), et qui a une surface extérieure non circulaire.

20. Faucheuse selon l'une au moins des revendications 1 à 19, caractérisée par le fait que des moyens d'étanchéité empêchent les fuites de lubrifiant entre le palier (54) et le cylindre de palier (53).

FIG.1

FIG.2

EP 0 304 584 A1

FIG.3

EP 0 304 584 A1

# FIG.4

EP 0 304 584 A1

FIG.5

FIG.6

55  118  56

54

65

119

120

FIG.7

124  127
126  125  52
54  56
53  128
121
123  122  66

FIG.8

129
61
54

FIG.9

54
61
129

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 070 585  (MULTINORM)<br>* Page 3, ligne 37 - page 4, ligne 22; page 5, lignes 25-30; figures 1,4,9,11 *<br>--- | 1,2,6,8 -11,13, 14,17, 18 | A 01 D  34/66 |
| Y | FR-A-2 372 989  (SKF NOVA)<br>* Page 3, ligne 6 - page 4, ligne 14; figure 1 *<br>--- | 1,2,6,8 -11,14, 17,18 | |
| A | FR-A-2 355 202  (FOLLIET)<br>* Page 3, ligne 21 - page 5, ligne 6; figures 1,2 *<br>--- | 2-4,8, 13,14, 20 | |
| A | GB-A-2 059 236  (VAN DER LELY)<br>* Page 1, ligne 95 - page 2, ligne 78; figures 2,3,6 *<br>--- | 1-3,5 | |
| A | US-A-1 536 514  (MEHLS)<br>* Page 1, ligne 59 - page 2, ligne 57; figures 1-5 *<br>--- | 1 | |
| A | FR-A-2 351 580  (VAN DER LELY)<br>* Page 4, ligne 18 - page 8, ligne 10; figures 2,4-6 *<br>----- | 2 | DOMAINES TECHNIQUES RECHERCHES (Int. Cl.4)<br><br>A 01 D<br>F 16 C<br>F 16 H |

Le présent rapport a été établi pour toutes les revendications

| Lieu de la recherche | Date d'achèvement de la recherche | Examinateur |
|---|---|---|
| LA HAYE | 15-12-1988 | DISSEN H.D. |